# EUROPEAN PATENT SPECIFICATION

(11) **EP 4 077 866 B1**
(45) Date of publication and mention of the grant of the patent: **27.08.2025**
(21) Application number: 20824245.3
(22) Date of filing: 16.12.2020
(51) Int. Cl.: E21B 17/01, E21B 43/01, E21B 47/07, E21B 36/00, E21B 36/04, E21B 41/02, F16L 53/37, H05B 3/00, F17D 1/18, F16L 53/34, H05B 3/04, H05B 3/42, H05B 6/10

(54) **HEATING SYSTEMS**
HEIZSYSTEME
SYSTÈMES DE CHAUFFAGE

(30) Priority: 20.12.2019 GB 201918937
(43) Date of publication of application: 26.10.2022
(73) Proprietor: Aker Solutions AS, 1325 Lysaker (NO)
(72) Inventor: BJERKNES, Ole Johan, 0786 Oslo (NO)
(74) Representative: Schlumberger Intellectual Property Department
(86) International application number: PCT/EP2020/086340
(87) International publication number: WO 2021/122686

(56) References cited:
- EP-A1- 2 493 262
- EP-A1- 2 493 262
- EP-A1- 3 244 116
- EP-B1- 2 493 262
- EP-B1- 3 244 116
- US-A1- 2002 122 664
- HALVORSEN ET AL., HYDRATE AND WAX PREVENTION OF RISERS BY ELECTRICAL HEATING
- HALVORSEN V H ET AL: "HYDRATE AND WAX PREVENTION OF RISERS BY ELECTRICAL HEATING", SYNTHETIC METALS, ELSEVIER SEQUOIA, LAUSANNE, CH, vol. 85, no. 1-03, 28 May 2000 (2000-05-28), pages 42 - 48, XP001051657, ISSN: 0379-6779

## Description

### Technical Field

The present invention relates to heating of risers and pipelines. In particular, the invention relates to electric heating systems configured for heating of hydrocarbon-conducting pipes.

### Background Art

When producing hydrocarbons from subsea wells, it is a well-known problem that hydrocarbons that are transported in steel pipelines can solidify at low temperatures. Since the temperature at the seabed often is low, typically 4 or 5 °C, the pipelines carrying the hydrocarbons tend to be cooled by the seawater. Hydrates can typically form at 15-20 °C, while wax formation can typically occur at 20-40 °C. Thus, it is common to use pipelines that have thermal insulation, as well as to provide a heating system to ensure flow in the pipelines. The same problem applies to risers that transport hydrocarbons between the seabed and a surface structure.

In some systems, a heated fluid is used to heat risers. In other systems, electric heating is used. Possible electric systems include direct electric heating and induction heating.

When using direct electric heating (DEH), electric current is guided through the steel of the pipeline. Induction heating involved providing an alternating magnetic field that induces electric currents in the steel of the pipeline, so that the induced currents heat the metal. In the latter method, the electric current is not fed into the steel itself, contrary to the DEH method.

While a subsea pipeline typically will be arranged on the seabed along its length, a riser will extend from the seabed and up to the surface structure, such as an FPSO or a rig. At the location of the seabed, the riser may be surrounded by cold water, while closer to the surface the riser may be surrounded by significantly warmer water. Furthermore, the distance of the riser that extends above the sea surface is not cooled by the seawater and will require even less heating to avoid solidification of the hydrocarbons.

The article *"*Hydrate and Wax Prevention of Risers by Electrical Heating", Halvorsen et al. from 2000 discusses heating of risers using DEH. The difference between using frequencies of 50 Hz and 400 Hz is examined.

Patent publication EP2493262 discloses a heating system for a riser and a pipeline. In this solution, one separate DEH system is provided for the riser and for the pipeline, respectively.

An object of the present invention may be to provide a riser heating system that enables the operator to adjust the heating of the riser according to need.

Another object may be to provide a riser heating system that is configured for heating more than the riser itself.

A further object may be to provide a riser heating system that is configured for power-supplying a subsea load at a remote location while simultaneously heating the riser.

Yet an object of the present invention may be to provide a novel riser heating system that is less prone to corrosion.

### Summary of invention

According to the present invention, there is provided a riser heating system arranged for heating a hydrocarbon-conducting riser that comprises a riser steel pipe and that extends from a surface structure towards the seabed. The system comprises an electric power supply having a first output line and a second output line, a first riser cable connected to the first output line and a second riser cable connected to the second output line. The first and second riser cables extend along the riser steel pipe. Furthermore, the power supply is configured to supply electric alternating currents in the first and second riser cables, thereby inducing heat in the riser steel pipe. The riser heating system has an upper riser termination at an upper end and a lower riser termination at a lower end, wherein the lower riser termination connects to a steel pipeline extending between the lower riser termination and a remote location, wherein a pipeline cable extends along the steel pipeline, and wherein the first riser cable is grounded at the position of the lower riser termination, the pipeline cable is grounded at the remote location, and the second riser cable connects to the pipeline cable, such that current supplied from the power supply flows through the steel of the pipeline.

The heat is generated in the riser steel pipe is due to the varying magnetic fields generated by the alternating currents in the riser cables.

The currents in the riser cables will heat the riser by induction heating, while the same current will heat the pipeline with direct electric heating.

As the skilled person will appreciate, when stating that the lower riser termination is connected to the steel pipeline, there may be intermediate elements between these two components that connect them, with fluid communication.

Moreover, the position where the first riser cable is grounded, i.e. at the lower riser termination, shall be understood to be a position suitable for enabling current transfer through the pipeline for direct electric heating thereof. Correspondingly, when stating that the pipeline cable is grounded at the remote end, it is meant at a position suitable for current transfer into the pipeline.

In some embodiments, the pipeline cable can be grounded through a subsea component induction heating cable, which is connected between ground and the pipeline cable, wherein the subsea component induction heating cable is arranged adjacent a subsea component comprising steel or other ferrous material.

By arranging the subsea component induction heating cable adjacent such a subsea component, heat will be generated in the material of the subsea component when an alternating current flows through the subsea component induction heating cable.

With the term adjacent, as used here, is meant that the subsea component induction heating cable is arranged sufficiently close to the subsea component to induce heat in it when alternating current is transported through the subsea component induction heating cable.

In some embodiments, the riser comprises a lower riser portion and an upper riser portion, wherein the upper riser portion is above the lower riser portion. The mutual distance between the first riser cable and the second riser cable can be larger in the lower riser portion than in the upper riser portion. By having a larger distance between the first and second riser cables, which carry currents in opposite directions, there will be less flux cancelling and hence more heat will be induced in the riser steel pipe.

In some embodiments, the riser can further comprise a dry riser portion that is above a sea surface and above the upper riser portion. The mutual distance between the first riser cable and the second riser cable can then be larger in the upper riser portion than in the dry riser portion. The needed heat in the dry riser portion is expected to be less than the need in the "wet" riser sections, due to the absence of cooling water.

The power supply can be configured to provide different frequencies of the electric power supplied to the first and second output lines.

By varying the frequency, the operator can adjust the heating power provided to the riser steel pipe. I.e. by increasing the frequency, more heating power will be supplied to the riser.

In some embodiments, the power supply can be configured to change the frequency within the range of 50 Hz to 200 Hz or even to 400 Hz.

Advantageously, the riser can further comprise a temperature sensor configured to measure the temperature of the riser steel pipe and/or the fluid inside the riser steel pipe. In such embodiments, the system can also comprise a control unit, which is connected to the temperature sensor and which is configured to control the output frequency of the power supply based on input from the temperature sensor.

Other embodiments may also comprise one or more temperature sensors.

The riser may in some embodiments have an outer sheath and filler material between the outer sheath and the riser steel pipe, wherein the first and second riser cables are embedded in the filler material.

The filler material can typically be chosen to provide thermal insulation of the riser steel pipe.

In some embodiments, the number of riser cables can be larger than the number of output lines that power the riser cables, as each riser cable can be connected to another riser cable by means of at least one upper or lower turn.

In some such embodiments, at least one upper turn can be arranged below the upper 2 %, 5 %, 10 % or even 30 % of the vertical extension of the riser.

In such embodiments, one can use the number of riser cables to obtain a higher heating power in the lower portions of the riser than in the upper portions of the riser. The upper turn would then connect two upper ends of riser cables.

In some embodiments including the steel pipeline, the system can comprise a first set and a second set of riser cables, wherein the first set comprises a lower turn that connects the riser cables and wherein the first riser cable of the second set is grounded at the position of the lower riser termination, the second riser cable of the second set connects to the pipeline cable, wherein the system further comprises a switch configured to switch between connection of the electric power supply to the first set and connection of the electric power supply to the second set, respectively.

In some embodiments of the present invention, the riser can comprise an upper riser termination at an upper end and a lower riser termination at a lower end, and the riser heating system can comprise four riser cables, wherein the first cable is connected to earth at the lower riser terminal and to a first node of a switching arrangement at an upper portion, wherein a second node of the switching arrangement is connected to a third riser cable, wherein the switching arrangement is configured for switching between a high-power riser heating mode and a low-power riser heating mode, wherein when in the low-power riser heating mode, current is guided through the first node, wherein when in the high-power riser heating mode, current is guided through the second node, such that when in the high-power riser heating mode, current is guided through more riser cables than when in the low-power riser heating mode.

With such an embodiment, the operator can adjust the heating power by actuating the switch. Such embodiments may also involve further nodes or further switches, enabling the operator to switch to even further modes.

In some embodiments, the power supply can be a first power supply and the riser heating system can further comprise a second power supply which is a multiphase power supply, a topside transformer to which the multiphase output lines of the second power supply and one of the output lines of the first power supply connect, a load-drive cable having a plurality of cores, connected to the topside transformer and extending down along the riser, a subsea load pipeline cable having a plurality of cores and extending along a pipeline extending between a near location and a remote location, wherein the subsea load pipeline cable connects to the load-drive cable at the near location, a subsea transformer at the remote location, connected to the subsea load pipeline cable and having output lines, wherein one output line connects to earth at the remote location and the other output lines connect to a load at the remote location, such that the second power supply powers the load.

With such an embodiment, the operator is enabled to simultaneously heat the riser steel pipe and the pipeline, and to drive for instance an electric motor at the remote location. Such an electric motor could for instance drive a subsea pump or a subsea compressor, typically pumping or compressing a hydrocarbon-containing fluid to be transported through the pipeline.

### Brief description of drawings

While various aspects and alternatives of the present invention have been discussed in general terms above, a more detailed and non-limiting example of embodiment will be presented in the following with reference to the drawings, in which
- Fig. 1: shows a schematic overview of a riser heating system according to the invention, arranged to heat a riser extending from the seabed to a surface structure;
- Fig. 2: shows a schematic cross-section view through a dry portion of a riser, above the sea surface;
- Fig. 3: shows a schematic cross-section view through a lower portion of a riser;
- Fig. 4: shows a schematic cross section view through an upper portion of a riser, below the sea surface;
- Fig. 5: depicts a schematic cross-section view through a pipeline resting on the seabed and having a DEH cable strapped onto it;
- Fig. 6: illustrates a cross-section view through a dry portion of another embodiment of a riser;
- Fig. 7: illustrates a cross-section view through a lower portion of the riser shown in Fig. 6;
- Fig. 8: shows another embodiment of a riser heating system;
- Fig. 9: is a schematic diagram of an electric power supply;
- Fig. 10: is a phase diagram illustrating the phases of the power supply shown in Fig. 9;
- Fig. 11a: is a cross-section view through the dry portion, above the sea surface, of another riser embodiment;
- Fig. 11b: is a cross-section view through an upper portion of the riser, below the sea surface;
- Fig. 11c: is a cross-section view through a lower portion of the riser;
- Fig. 12: is s schematic illustration of an alternative embodiment of the riser heating system;
- Fig. 13: depicts another embodiment of the riser heating system;
- Fig. 14: shows a further embodiment of the riser heating system;
- Fig. 15: illustrates a riser heating system according to the invention, configured to heat a subsea component at the remote location;
- Fig. 16: is a schematic cross-section view through the riser of the embodiment shown in Fig. 15;
- Fig. 17: illustrates a riser heating system according to the invention, which is configured to run a remote motor;
- Fig. 18: is a schematic cross-section view through the riser and attached cables, of the embodiment shown in Fig. 17;
- Fig. 19: is a schematic cross-section view through the pipeline and attached cables, of the embodiment shown in Fig. 17;
- Fig. 20: is a principle perspective view showing the principle layout of a skin-effect heat tracing system (STS) heating arrangement;
- Fig. 21: is a schematic diagram involveing an STS heating arrangement;
- Fig. 22: is a schematic cross-section view through a riser according to the embodiment shown in Fig. 21;
- Fig. 23a: shows another embodiment using the STS heating arrangement;
- Fig. 23b: shows a cross section through the pipeline shown in Fig. 23a;
- Fig. 24a: shows another embodiment using the STS heating arrangement;
- Fig. 24b: shows a cross section through the riser shown in Fig. 24a;
- Fig. 25a: shows an embodiment using ferromagnetic conductors for heating of a riser and/or for heating of a subsea pipeline; and
- Fig. 25b: shows a cross section through the subsea pipeline assembly shown in Fig. 25a.

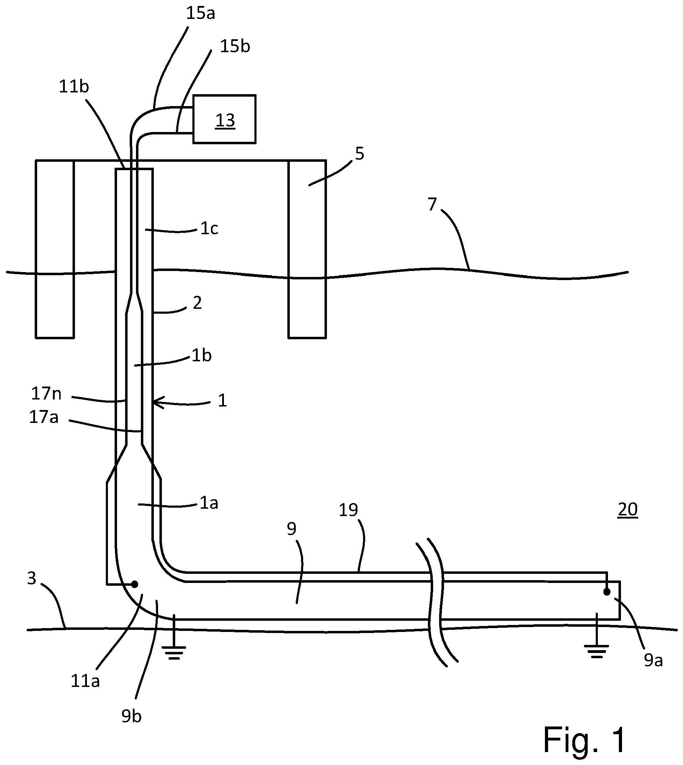

In Fig. 1 there is shown a schematic illustration of an embodiment of the invention, where a riser 1 extends from the seabed 3 to a surface structure 5 at the sea surface 7. In the shown embodiment the surface structure 5 is a floating structure, such as an FPSO or a floating rig. However, the surface structure 5 could also be a structure resting on the seabed, such as a gravity-based structure.

The riser 1 comprises a riser steel pipe 2 that can be heated by means of induction heating.

At the seabed 3, at a near location 10, the riser 1 connects to a steel pipeline 9 that extends to a remote location 20. At the remote location 20, there could typically be a subsea well template (not shown) or a gas compression facility (not shown). The steel pipeline is thus arranged to transport hydrocarbons from the remote location 20 towards the riser 1.

It should be appreciated that although the riser 1 and steel pipeline 9 shown in the simplified view of Fig. 1 appears to be one continuous pipe, they would typically be assembled by several parts. The ends of the riser 1 are herein termed a lower riser termination 11a and an upper riser termination 11b. Moreover, the lower riser termination 11a may terminate in a (not-shown) transition part arranged between the steel pipeline 9 and the riser 1. The sea depth and thus the length of the riser 1 can typically be more than hundred meters, or even several hundreds of meters. In some cases, the riser length can be more than thousand meters or even more than two thousand meters.

As shown in Fig. 1, the riser 1 comprises a lower riser portion 1a that connects to the steel pipeline 9 at the seabed location. Typically, the lower riser portion 1a will be surrounded by cold water, since it is close to the seabed.

The riser 1 further comprises an upper riser portion 1b, which is arranged below the sea surface 7, however above the lower riser portion 1a. Typically, the temperature of the sea water that surrounds the upper riser portion 1b is warmer than the sea water surrounding the lower riser portion 1a. Due to this temperature difference, the lower riser portion 1a will require more heating power per riser length than the upper riser portion 1b.

The riser 1 also comprises a dry riser portion 1c. The dry riser portion 1c is the part of the riser 1 that extends from the sea surface 7 to the upper riser termination 11b on the surface structure 5. The dry riser portion 1c is thus above the upper riser portion 1b, as shown in Fig. 1.

The upper riser termination 11b is merely shown as a pipe end in Fig. 1. It will be understood that the transported fluid is taken care of by further transport, such as to a separation facility and a storage facility.

Since the dry riser portion 11c is above the sea water, it is not cooled down in the same manner as the wet part of the riser 1. Consequently, the dry riser portion 11c will typically need less heating or perhaps no heating.

Still referring to Fig. 1, on the surface structure 5 there is arranged an electric power supply 13. The power supply 13 is an electric power supply having at least two output lines. In the shown embodiment, the power supply 13 is a single-phase power supply having a first output line 15a and a second output line 15b.

The first and second output lines 15a, 15b constitute the output of an AC power supply. The first and second output lines 15a, 15b connect to a respective first riser cable 17n and a second riser cable 17a. The riser cables 17n, 17a extend along the riser 1 towards the seabed 3.

As shown in Fig. 1, the first riser cable 17n is earthed to the seabed 3 at the position of the lower riser termination 11a. The second riser cable 17a connects to a pipeline cable 19 that is piggybacked to the steel pipeline 9. The pipeline cable 19 extends between the lower riser termination 11a and the remote pipe end 9a of the steel pipeline 9, at the remote location 20. At this position, the pipeline cable 19 is earthed.

When electric power is supplied from the power supply 13 to the first and second riser cable 17n, 17a, electric current will flow through the steel pipeline 9, between the remote pipe end 9a at the remote location 20, and a near pipe end 9b, at the lower riser termination 11a. In this manner, DEH is used for heating the steel pipeline 9.

Although not shown in Fig. 1, the pipeline 9 will be provided with current transfer zones, as is well known to the person of skill.

The riser 1 is heated, on the other hand, by means of induction heating. The alternating current flowing through the first and second riser cables 17n, 17a will induce heat in the steel pipe 2 of the riser 1.

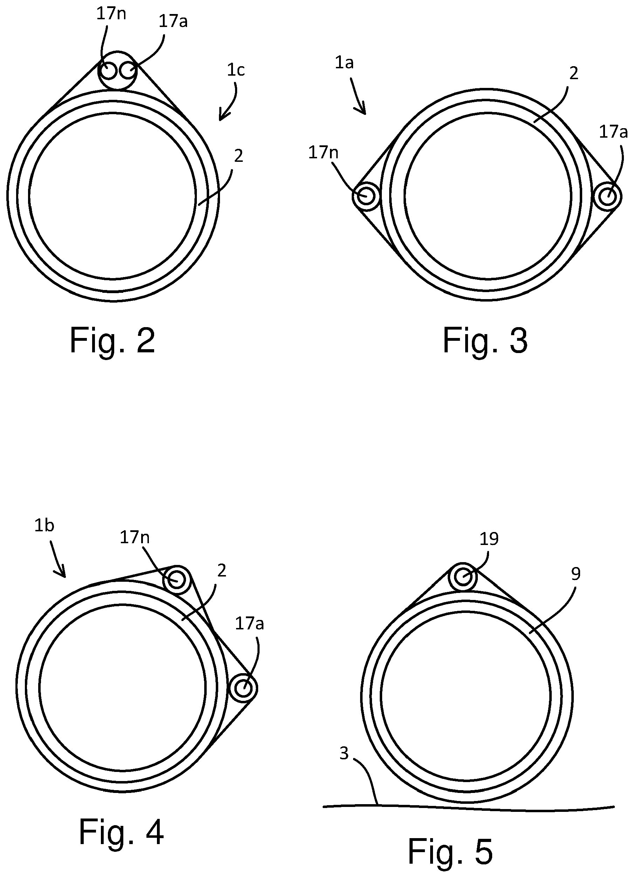

Reference is now made to Fig. 2, Fig. 3, and Fig. 4. Fig. 2 depicts a cross section view through the dry riser portion 1c. In the dry riser portion 1c, the first and second riser cables 17n, 17a are arranged in a common cable bundle which is piggybacked to the riser 1. Since the two riser cables 17n, 17a carry the same amount of alternating current, however in opposite directions (∠ = 180°), the magnetic fields generated by each of these two currents will substantially cancel each other out. Thus, there is substantially no magnetic field that will induce heat in the riser steel pipe 2 in the dry riser portion 1c.

Fig. 3 depicts a cross section through the lower riser portion 1a. In the lower riser portion 1a the first and second riser cables 17n, 17a are arranged with a significant distance between them. In this embodiment, the riser cables are arranged at opposite sides of the riser steel pipe 2, i.e. 180° apart with respect to the center axis of the riser steel pipe 2. Due to the significant mutual distance between the riser cables, and the fact that the riser steel pipe 2 is interposed between them, the magnetic fields generated by the two currents will not cancel each other out. Instead, the two opposite currents in the first and second riser cables 17n, 17a will induce heat in the riser steel pipe 2.

Fig. 4 depicts a cross section through the upper riser portion 1b, which is between the lower riser portion 1a and the dry riser portion 1c. In the upper riser portion 1b, there is a significant distance between the first and second riser cables 17n, 17a. Their mutual distance is not as large as in the lower riser portion 1a, but larger than in the dry riser portion 1c. With this medium mutual distance between the riser cables 17n, 17a, there will be significant field cancellation of the magnetic fields generated from the two opposite currents. However, there will still be induced a significant amount of heat in the riser steel pipe 2.

Thus, by adapting the mutual position of the first and second riser cables 17n, 17a on the riser 1, the heat power delivered to the riser 1 can be adapted to need. In particular, the lower riser portion 1a arranged in cold seawater can be heated more than the upper riser portion 1b arranged in warmer water. Furthermore, the upper riser portion 1b can be heated more than the dry riser portion 1c, which is arranged above the sea surface 7.

In preferred embodiments, there will be arranged thermal insulation outside the riser steel pipe 2. The riser cables 17n, 17a can then be attached on the outside of the insulation or be embedded within the insulation.

As shown in Fig. 1, the second riser cable 17a connects to the pipeline cable 19, such that also the steel pipeline 9 can be heated. As discussed above, the pipeline 9 is heated with direct electric heating, by letting current flow through the steel pipeline 9.

Fig. 5 is a cross section through the pipeline 9, with the pipeline cable 19 piggybacked onto the pipeline.

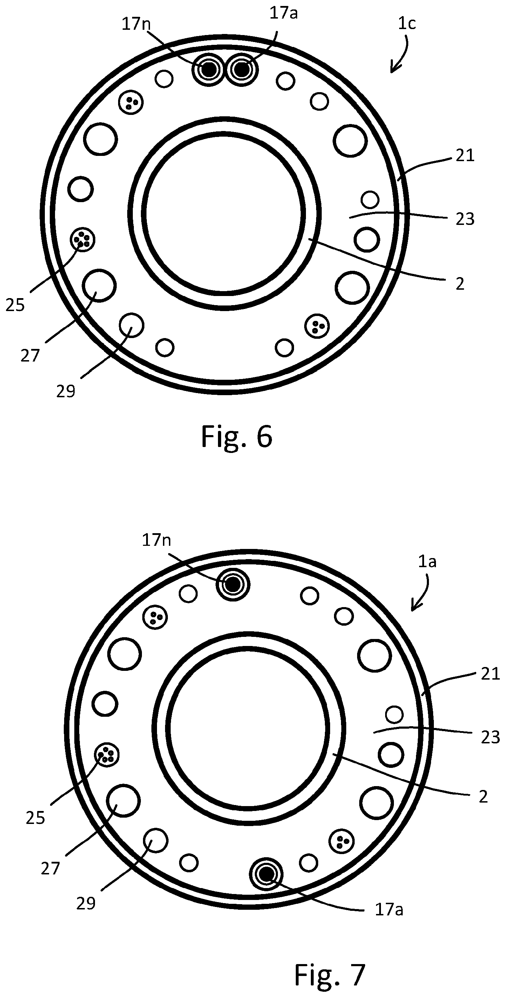

Fig. 6 and Fig. 7 are cross section views through an alternative riser 1, which may be used with an embodiment according to the invention. In this embodiment the riser 1 comprises an outer sheath 21. The outer sheath 21 encloses a filler material 23, arranged between the sheath 21 and the riser steel pipe 2. Such a riser may be called an integrated riser.

Embedded in the filler material 23, there are possible additional elements, such as an electric and/or optic control line 25, fluid lines 27 and tension elements 29. Also embedded in the filler material 23, between the outer sheath 21 and the riser steel pipe 2, are the first and second riser cables 17n, 17a.

Fig. 6 depicts the cross section through the dry riser section 1c, where the first and second riser cables 17n, 17a are arranged close to each other. This corresponds to Fig. 2, which was discussed above.

Fig. 7 depicts the cross section through the lower riser section 1a, where the first and second riser cables 17n, 17a are arranged on opposite sides of the riser steel pipe 2, thereby being configured to induce heat in the riser steel pipe 2.

When using embodiments as shown in Fig. 6 and Fig. 7, the riser 1 comprises one or more transition portions (not shown) where the positions of the first and second riser cables 17n, 17a are changed along the axial extension of the riser 1. Such transition portions may typically exhibit a somewhat wider diameter, to provide enough space for the riser at least one riser cable to change its position with respect to the other riser cable. Alternatively, there may be arranged a junction box (not shown) that connects the various riser portions 1a, 1b, 1c and changes the position of the riser cable(s).

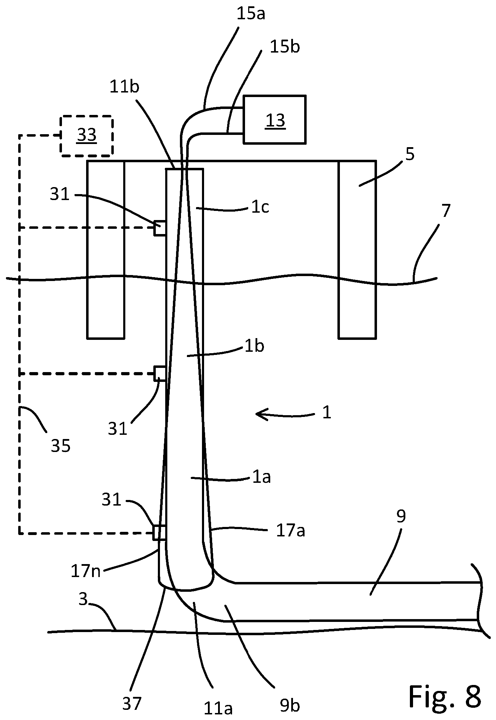

Fig. 8 depicts an embodiment where the mutual distance between the first and second riser cables 17n, 17a is continuously increasing along the downward extension of the riser 1. This contrasts with the embodiment shown in Fig. 1, where the mutual distance increased in steps along the extension of the riser 1. Thus, substantially no induction heating will occur in the upper part of the dry riser portion 1c, while a maximum induction heating will occur at the lower part of the lower riser portion 1a.

In the embodiment shown in Fig. 8, at the position of the lower riser termination 11a, the first riser cable 17n connects to the second riser cable 17a via a lower turn 37. Thus, in this embodiment, the power fed to the riser cables 17n, 17a is not used for heating of the steel pipeline 9.

In the embodiment shown in Fig. 8, the riser 1 comprises temperature sensors 31. The temperature sensors are distributed along the extension of the riser 1 and are configured to measure the temperature inside the riser steel pipe 2 or of the riser steel pipe 2 itself. The temperature sensors 31 may of course also be arranged with some distance from the riser steel pipe 2, thus indirectly measure the temperature of the riser steel pipe 2.

The temperature sensors 31 connect to a control unit 33 through input lines 35, shown with dashed lines in Fig. 8. The control unit 33 is configured to control the output frequency of the power supply 13. Thus, if a measured temperature, as measured with one of the temperature sensors 31, is too low, the control unit 33 will increase the output frequency of the power supply 13. The increase of output frequency will increase the heating power supplied to the riser steel pipe 2.

Instead of or in addition to controlling the frequency, the control unit 33 can be configured to control the output current from the power supply 13. Thus, the control unit 33 can adjust the heating power by changing the output current.

Advantageously, the control unit 33 may run a computer-readable software, which continuously monitors the temperature and adjusts the output frequency and/or output current. By adjusting the frequency and the amperage output from the power supply 13, the control unit 33 can control the heating of the riser steel pipe 2.

With embodiments where also the pipeline 9 is heated, the operator can adjust the heating of both the riser steel pipe 2 and the pipeline 9. Increased frequency will increase heating of the riser steel pipe 2 more than the heating increase of the pipeline 9. Thus, the operator may for instance increase the frequency and lower the amperage to increase the ratio of heating of the riser steel pipe compared to the heating of the pipeline.

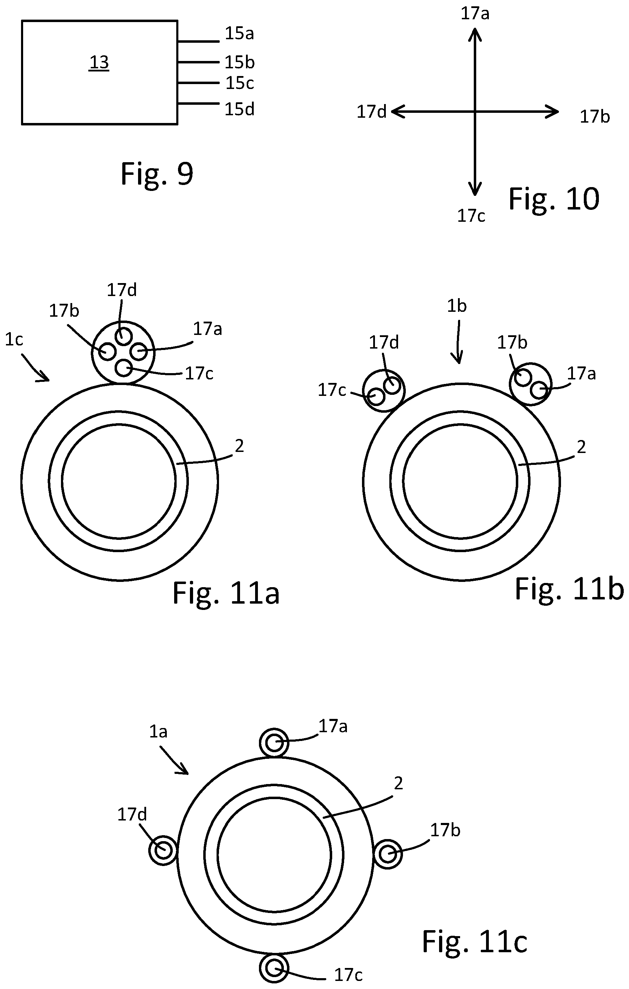

Fig. 9 schematically depicts a 4-phase power supply 13 having four phases supplied to four output lines 15a, 15b, 15c, 15d. The diagram in Fig. 10 illustrate the electric power on the output lines, as transferred to four riser cables 17a, 17b, 17c, 17d. As shown in Fig. 10, there is an angle of 90° between each of the four phases.

When the four riser cables 17a, 17b, 17c, 17d are assembled in a common group, as depicted with the cross-section view in Fig. 11a, the magnetic field from the four phases will substantially cancel each other out. Consequently, in the dry riser portion 1c, which is depicted in Fig. 11a, there will be substantially no induction heating of the riser steel pipe 2.

Fig. 11b depicts a cross-section view through a part of the upper riser portion 1b. In this portion, two phases having a mutual angle of 90° are arranged together in two respective groups. The two groups have some distance between them, thus inducing some heat in the riser steel pipe 2. Notably, however, there will be some field cancellation because of the proximity between the two groups.

Fig. 11c shows a cross-section view through the lower riser portion 1a. In this portion, each phase is distributed about the riser steel pipe 2 with 90 mechanical degrees. Thus, with the layout shown in Fig. 11c, a substantial heating power is induced in the riser steel pipe 2.

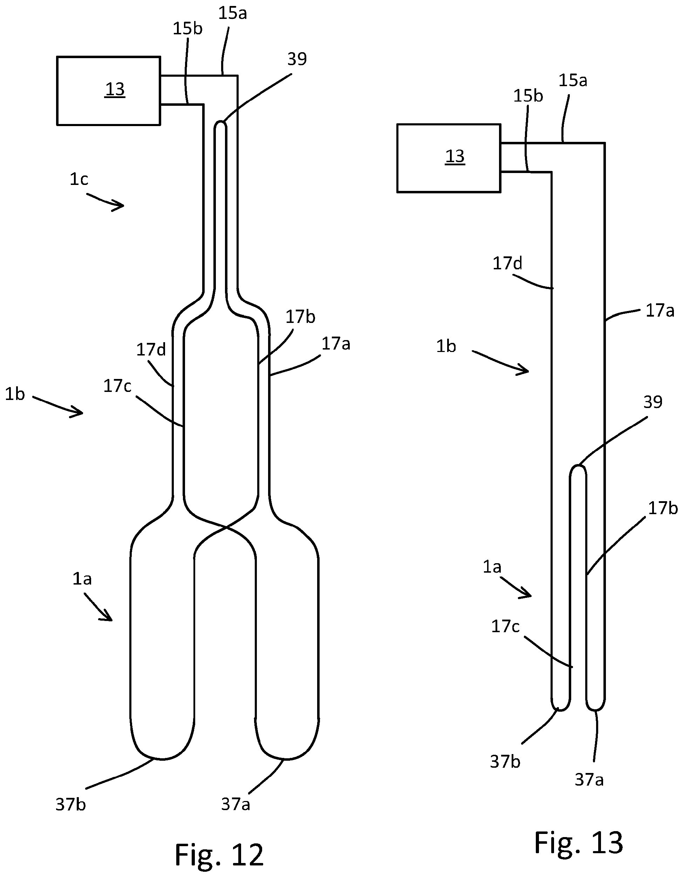

Fig. 12 illustrates an alternative embodiment of the riser heating system. For simplicity, the illustration in Fig. 12 depicts only the riser cables 17a, 17b, 17c, 17d and not the riser itself. In this embodiment, the electric power supply 13 has two output lines 15a, 15b, corresponding to the embodiment shown in Fig. 1. However, contrary to the embodiment shown in Fig. 1, the embodiment shown in Fig. 12 involves four riser cables 17a, 17b, 17c, 17d. As appears from the schematic drawing of Fig. 12, the first riser cable 17a is connected to the first output line 15a of the power supply 13. Further, the first riser cable 17a extends down along the riser (not shown) and returns back up as the second riser cable 17b. The first riser cable 17a connects to the second riser cable 17b with a first lower turn 37a. The second riser cable 17b connects to the third riser cable 17c with an upper turn 39. The third riser cable 17c extends down along the riser and connects further to the fourth riser cable 17d with a second lower turn 37b. The fourth riser cable 17d extends upwards along the riser and connects to the second output line 15b of the power supply 13.

By using this setup, having more (four) riser cables connected to the fewer (two) outputs of the power supply 13, one can obtain an increased heating of the riser steel pipe 2 without increasing the amperage out from the power supply 13.

Moreover, this setup enables a more even distribution of the heating power delivered to the riser 1, due to the increased number of riser cables, as compared with the embodiment shown in Fig. 1.

In the embodiment depicted in Fig. 12, the riser cables 17a, 17b, 17c, 17d can for instance be distributed as depicted in Fig. 11a, Fig. 11b, and Fig. 11c.

Fig. 13 illustrates another layout of the riser cables 17a, 17b, 17c, 17d. In this embodiment, there are four riser cables connected to only two output lines 15a, 15b of the power supply 13, corresponding to the embodiment shown in Fig. 12. However, while the upper turn 39 in the embodiment shown in Fig. 12 is arranged close to the upper riser termination 11b (cf. Fig. 1), the upper turn 39 in the embodiment shown in Fig. 13 is arranged significantly lower on the riser 1.

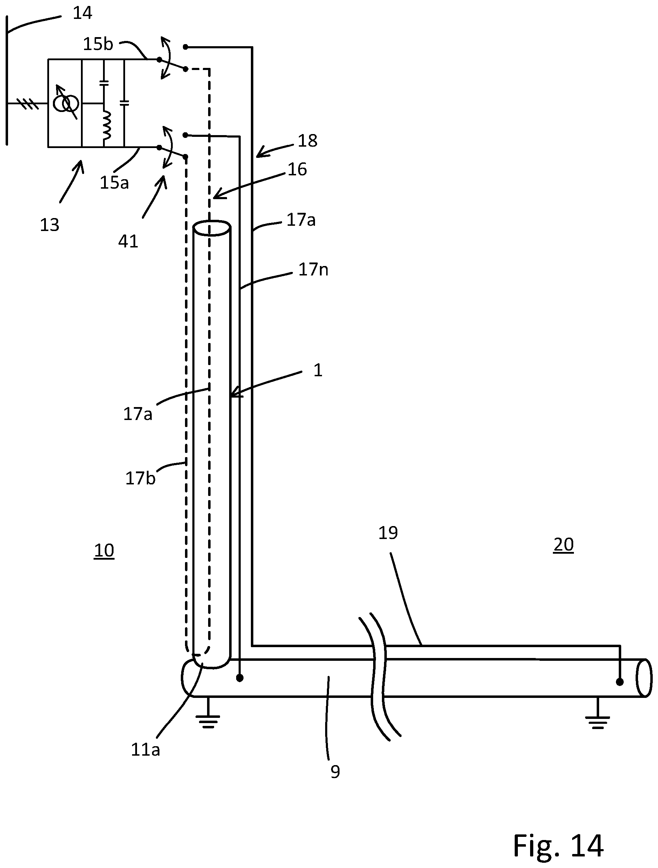

In the embodiment shown in Fig. 14, there is arranged two sets of riser cables, namely a first set 16 and a second set 18. In the view shown in Fig. 14, the power supply 13 is shown as a 3-to-1-phase symmetrization arrangement that is connected to a grid 14.

A switching arrangement 41 is arranged, which enables the operator to switch between the first set 16 and the second set 18 of riser cables 17a, 17b.

The first set 16 of riser cables 17a, 17b extend down and back up along the riser 1, with a lower turn 37 substantially at the position of the lower riser termination 11a. This corresponds to the solution depicted in Fig. 8, where only the riser 1 is heated by induction heating. The second set 18 of riser cables 17n, 17a has a layout that corresponds to the embodiment shown in Fig. 1, wherein both the riser 1 and the pipeline 9 can be heated.

Thus, with the embodiment shown in Fig. 14, the operator can select between two modes, namely heating of the riser 1 only, or heating both the riser 1 and the pipeline 9.

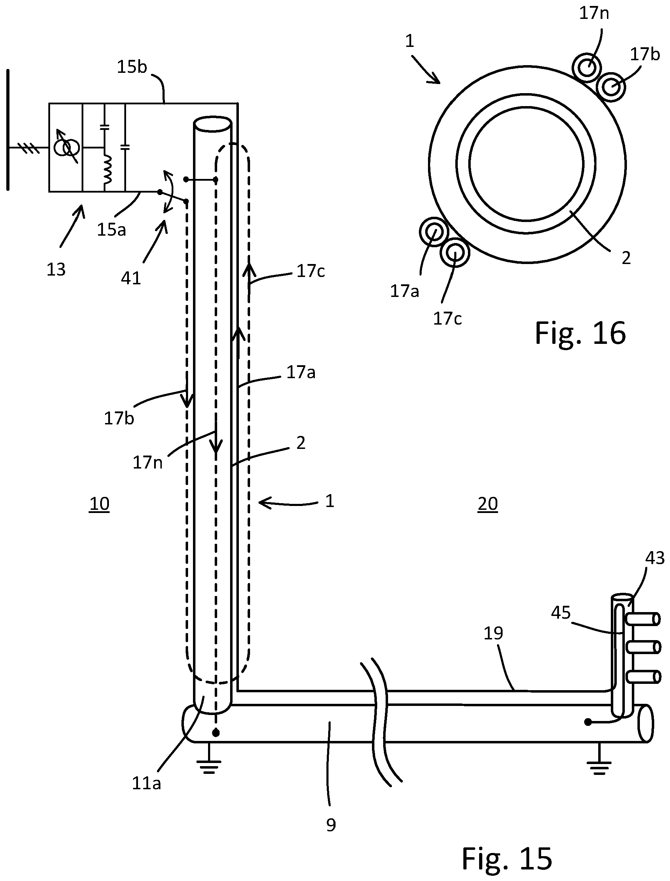

A further feature is shown in Fig. 15. At the remote location 20, there is a subsea component 43 comprising steel or other ferrous material. The subsea component 43 in the embodiment shown in Fig. 14 is a subsea manifold.

In the embodiment shown in Fig. 15, the pipeline cable 19 is grounded through a subsea component induction heating cable 45, which is connected between ground and the pipeline cable 19. The subsea component induction heating cable 19 is arranged adjacent the subsea component 43, so that the alternating current flowing through it will induce heat in the subsea component 43.

While the shown induction-heated subsea component 43 is a subsea manifold, the subsea component could be a variety of other components, e.g. a tie-in jumper.

In the embodiment shown in Fig. 15 there are arranged four riser cables 17n, 17a, 17b, 17c. The first cable 17n is connected to earth at the lower riser terminal 11a. At an upper portion, the first riser cable 17n is connected to one node of a switching arrangement 41. The other node of the switching arrangement 41 is connected to a third riser cable 17b. As appears from Fig. 15, the switching arrangement 41 enables to operator to switch between a high-power riser heating mode and a low-power riser heating mode. When in the low-power riser heating mode, current is guided only through two riser cables, namely the first riser cable 17n and the second riser cable 17a. When in the high-power riser heating mode, current is transported through all four riser cables, thus inducing more heat in the riser steel pipe 2.

To facilitate discussion of this embodiment, each of the four riser cables are provided with an arrow to indicate the current direction at a given moment. Fig. 16 is a cross section through the riser 1, showing how the four riser cables 17n, 17a, 17b, 17c are distributed about the riser steel pipe 2. It can be appreciated that the first and third riser cables 17n, 17b carry current in the same direction, while also the second and fourth riser cables 17a, 17c carry current in the same direction, however opposite to the current in the first and third riser cables. Thus, since each pair are arranged on opposite side of the riser steel pipe 2, induction heating will take place in the riser steel pipe 2. Moreover, when in the low-power riser heating mode, in which power only will be carried in the first riser cable 17n and the second riser cable 17a, there will be less heat induced in the riser 1.

It will be understood that while the riser cables 17n, 17a, 17b, 17c shown in Fig. 16 can be piggybacked onto the riser steel pipe 2 (which may be insulated as shown in Fig. 16), the riser cables may also be integrated in a production umbilical riser 1, such as shown in Fig. 6 and Fig. 7.

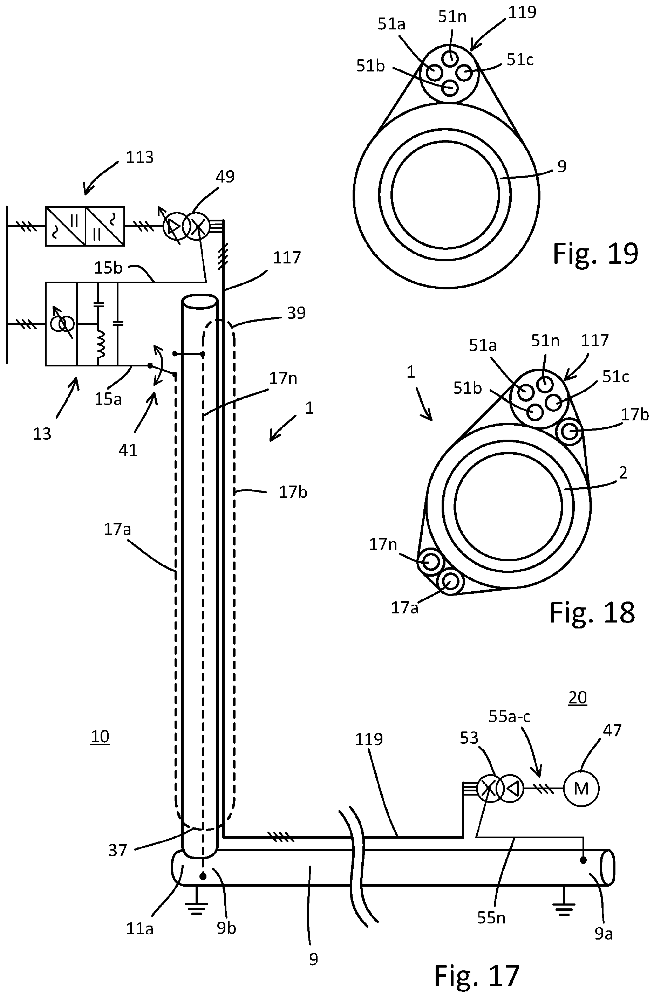

Reference is not made to Fig. 17, which depicts an embodiment that has several similarities with the embodiment shown in Fig. 15. The embodiment shown in Fig. 17 is, however, configured to drive a load at the remote location. In this embodiment, this load is an electric motor 47.

In addition to the power supply 13, which is arranged for heating of the riser 1 and in the shown embodiment also the pipeline 9, there is a second power supply 113 which is configured to drive the electric motor 47. The second power supply 113 can typically be a variable speed drive (VSD). The second power supply 113 connects to a topside transformer 49. Typically, the topside transformer 49 can be a Dxn transformer having four output cables 51n, 51a, 51b, 51c.

As shown in Fig. 17, one of the output lines of the power supply 13, the first output line 15a in this embodiment, connects to the neutral point of the topside transformer 49. The four output cables 51n, 51a, 51b, 51c are joined in a load-drive cable 117, which in this embodiment is a four-core motor-drive cable 117. The motor-drive cable 117 is piggybacked to the riser 1 together with the riser cables 17n, 17a, 17b. This is shown with the cross section in Fig. 18. It will be appreciated that one of the four output cables 51n will correspond to one of the riser cables 17a in the embodiment shown in Fig. 15.

Still referring to Fig. 17, a four-core, subsea load pipeline cable 119 is piggybacked to the pipeline 9. The subsea load pipeline cable 119 will typically be an extension of the motor-drive cable 117 that is extended along the riser 1. Fig. 19 depicts a cross section of the pipeline 9 with the subsea load pipeline cable 119.

The subsea load pipeline cable 119 connects to a subsea transformer 53 at the remote location 20. The subsea transformer 53 has four output lines of which three output lines 55a, 55b, 55c connect to the motor 47, and one output line 55n is earthed at the remote pipe end 9a. The subsea transformer 53 can typically be an XNd transformer.

Thus, with the embodiment shown in Fig. 17, the operator can use the power supply 13 to heat the pipeline 9 and the riser 1, while operating the motor 47 at the remote location 20 by controlling the second power supply 113.

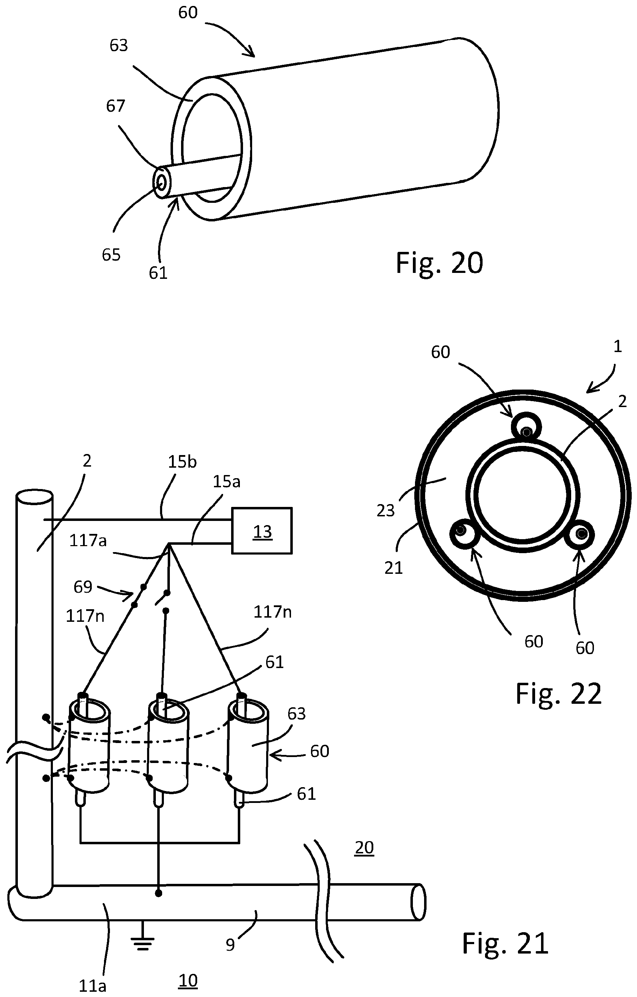

Fig. 20 shows a principle drawing of a skin-effect heat tracing system heating arrangement 60. As will be discussed further below, the skin-effect heat tracing system (STS) heating arrangement 60 can in some embodiments be used for heating fluid-conducting pipes, such as the riser steel pipe 2 of the riser 1, or the pipeline 9 shown in some of the previous figures.

The STS heating arrangement 60 comprises an insulated cable 61 that is arranged inside an outer ferromagnetic tube 63. Typically, the ferromagnetic tube 63 will be a steel tube. The insulated cable 61 comprises an inner conductor 65, typically of a non-ferromagnetic metal, such as copper. Outside the inner conductor 65, there is an insulating material 67. As shown in Fig. 20, the insulated cable 61 is arranged loosely inside the ferromagnetic tube 63.

When an alternating current is transmitted through the insulated cable 61, heat will be generated in the ferromagnetic tube 63 by induced currents. The induced currents will flow at the inner surface of the ferromagnetic tube, in the so-called skin-depth. An advantage of using the STS heating arrangement 60 for riser heating, is that at the external surface of the ferromagnetic tube 63, the electric potential is zero. This makes it less prone to corrosion. This feature also reduces risks related to electric voltages in areas where hydrocarbons are treated or transported.

Reference is now made to Fig. 21, which schematically depicts a solution for heating a riser 1, such as the riser 1 shown in Fig. 8. In this embodiment, only heating of the riser 1 or the riser steel pipe 2 is shown (i.e. not heating of the pipeline 9). As in previously discussed embodiments, the power supply 13 has a first output line 15a and a second output line 15b. The first output line 15a is split in three conductor lines 117n. Each conductor line 117n is connected to a respective inner conductor 65 of an insulated cable 61. In the shown embodiment, there are arranged three STS heating arrangements 60 that extend from the topside location, along the riser steel pipe 2, towards the lower riser termination 11a.

The second output line 15b of the power supply 13 is connected to the upper portion of the riser steel pipe 2.

As indicated with the dashed lines, the upper and lower end portions of the ferromagnetic tubes 63 are connected to the riser steel pipe 2. It shall be understood that the diagram shown in Fig. 21 is for illustrating the electric connections and that the STS heating arrangements 60 extend along the riser steel pipe 2 from its upper portion to its lower portion.

Fig. 22 depicts a cross section through a riser 1 according to the embodiment discussed with reference to Fig. 21. The riser 1 comprises three STS heating arrangements 60. The ferromagnetic tubes 63 are, at the location of the lower riser termination 11a, connected to the inner conductors 65 of the respective STS heating arrangements 60. In the shown embodiment, the inner conductors 65 and the ferromagnetic tubes 63 are also connected to earth at the lower end of the riser 1.

In a typical embodiment, the ferromagnetic tubes 63 will be electrically connected to earth at each end of the riser steel pipe 2. The ferromagnetic tubes 63 can also be connected to earth at more locations, along their entire extension.

As stated above, the current flowing through the insulated cable 61 induces a current in the ferromagnetic tube 63. This induced current, in the ferromagnetic tube 63, can flow in the opposite direction through the riser steel pipe 2, with the embodiment shown in Fig. 21.

Thus, current is transferred through each of the three STS heating arrangements 60, namely through the insulated cables 61 and in the opposite direction through the ferromagnetic tubes 63. This heats the ferromagnetic tubes 63.

As shown with the cross-section view of Fig. 22, the ferromagnetic tubes 63 are arranged in immediate proximity to the riser steel pipe 2. Thus, the heat generated in the ferromagnetic tubes is transferred to the riser steel pipe 2 by heat convection.

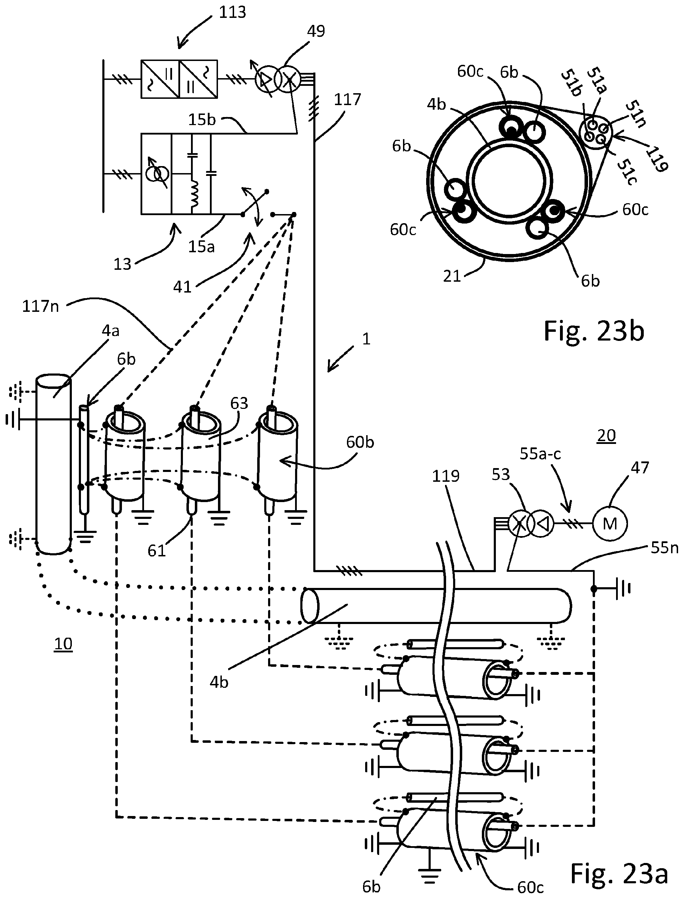

Fig. 23a illustrates an embodiment that has many similarities with the embodiment shown in Fig. 17. Contrary to the embodiment shown in Fig. 17, however, the riser and the pipeline are heated with STS heating arrangements 60. Moreover, instead of a riser steel pipe that is made of steel, the riser 1 has a non-metallic pipe 4a. The non-metallic pipe 4a is electrically non-conducting or semiconducting.

Furthermore, instead of a steel pipeline extending between the near location 10 and the remote location 20, there is a non-metallic pipeline 4b, which also is heated with STS heating arrangements.

It will be understood that the non-metallic pipe 4a of the riser 1 is in fluid-communication with the non-metallic pipeline 4b, as indicated with the dotted lines in Fig. 23a.

Since the non-metallic pipe 4a in the riser 1 and the non-metallic pipeline 4b is not configured for conducting electric current, an auxiliary conductor 6b is arranged in parallel with the STS heating arrangements 60. The auxiliary conductors 6b connect to the respective end portions of the ferromagnetic tubes 63, and are thus configured to receive and transport the currents that are induced in the ferromagnetic tubes 63.

The auxiliary conductors 6b can for instance be made of polyethylene (PE) coated ferromagnetic material, or another conducting material. The auxiliary conductors 6b can also used as weight elements and/or strength elements. If using auxiliary conductors 6b of ferromagnetic material, the auxiliary conductors 6b will also generate heat, which can be used for heating of the non-metallic pipeline 4b and/or the non-metallic pipe 4a in the riser 1.

The non-metallic pipe 4a of the riser 1 is heated with riser STS heating arrangements 60b, while the non-metallic pipeline 4b is heated with pipeline STS heating arrangements 60c.

Fig. 23b depicts a cross section through the non-metallic pipeline 4b shown in Fig. 23a. The non-metallic pipeline 4b is part of a pipe assembly, wherein the non-metallic pipeline 4b, the pipeline STS heating arrangements 60c and the auxiliary conductors 6b are arranged within a common sheath 21.

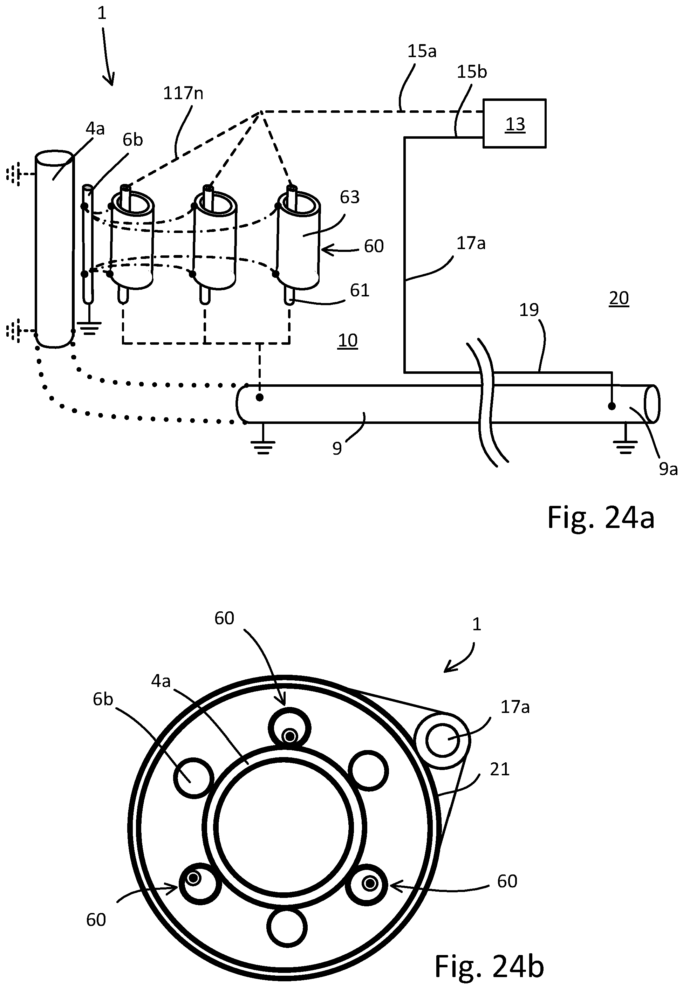

Fig. 24a and Fig. 24b illustrate an embodiment where the riser 1 comprises a non-metallic pipe 4a, while a steel pipeline 9 extends between the near location 10 and the remote location 20. In this embodiment, the non-metallic pipe 4a is heated with STS heating arrangements 60, while the pipeline 9 is heated with DEH by means of the pipeline cable 19.

Fig. 24b illustrates a cross section through the riser 1. The STS heating arrangements 60 and the auxiliary conductors 6b are arranged within a sheath 21. In the shown embodiment, the riser cable 17a is strapped on the external side of the sheath 21. However, in this and other embodiments disclosed herein, the riser cable 17a could also be arranged between the sheath 21 and the fluid pipe (i.e. the non-metallic pipe 4a in the present embodiment).

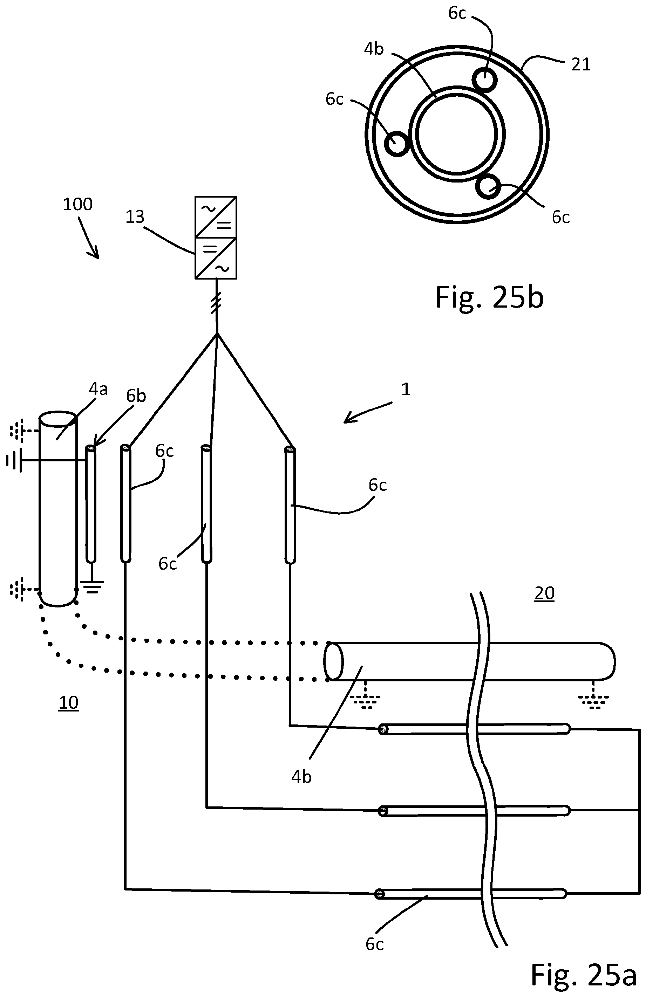

Fig. 25a and Fig. 25b depict another method of heating of a non-metallic fluid pipe. In the shown embodiment, the fluid pipe 4a in the riser 1 and the pipeline 4b extending along the seabed, between a near location 10 and a remote location 20, are non-metallic. I.e. they are not electrically conductive, or possibly semi-conductive in some embodiments.

The power supply 13 shown in this embodiment is a three-phase power supply. In other embodiments, it could be another type of power supply, for instance having only two outputs, such as the outputs 15a and 15b discussed above.

The heating assembly shown in Fig. 25a and Fig. 25b generates heat by conducting electric current through ferromagnetic conductors 6c. Advantageously, the ferromagnetic conductors 6c can be polyethylene coated (PE).

In the shown embodiment, both the riser 1 and the pipeline assembly, including the pipeline 4, comprises such ferromagnetic conductors 6c. In the shown embodiment, one ferromagnetic conductor 6c is connected to one respective phase of the three-phase power supply 13.

In other embodiments, there could be fewer or more than three current-carrying ferromagnetic conductors 6c.

The ferromagnetic conductors 6c will generate heat when current is transported through them. As shown in Fig. 25b, by arranging the ferromagnetic conductors 6c adjacent the fluid pipe 4b, the fluid pipe 4b will be heated. To avoid heat loss to the ambient seawater, the ferromagnetic conductors 6c can advantageously be thermally insulated inside a sheath 21 comprising filler material.

The riser 1 can have a cross section corresponding to the cross section shown in Fig. 25b.

## Claims

1. A riser heating system arranged for heating a hydrocarbon-conducting riser (1) that comprises a riser steel pipe (2) and that extends from a surface structure (5) towards the seabed (3), the system comprising
- an electric power supply (13) comprising a first output line (15a) and a second output line (15b);
- a first riser cable (17n) connected to the first output line (15a) and a second riser cable (17a) connected to the second output line (15b), wherein the first and second riser cables (17n, 17a) extend along the riser steel pipe (2);
wherein the power supply (13) is configured to supply electric alternating currents in the first and second riser cables (17n, 17a), thereby inducing heat in the riser steel pipe (2), wherein the riser (1) comprises an upper riser termination (11b) at an upper end and a lower riser termination (11a) at a lower end,
wherein the lower riser termination (11a) connects to a steel pipeline (9) extending between the lower riser termination and a remote location (20),
wherein a pipeline cable (19) extends along the steel pipeline (9),
wherein the first riser cable (17n) is grounded at the position of the lower riser termination (11a), the pipeline cable (19) is grounded at the remote location (20),
**characterized in that**
the second riser cable (17a) connects to the pipeline cable (19), such that current supplied from the power supply (13) flows through the steel of the pipeline (9).

2. A riser heating system according to claim 1, wherein the pipeline cable (19) is grounded through a subsea component induction heating cable (45), which is connected between ground and the pipeline cable (19), and wherein the subsea component induction heating cable (19) is arranged adjacent a subsea component (43) comprising steel or other ferrous material.

3. A riser heating system according to one of the preceding claims, wherein the riser (1) comprises a lower riser portion (1a) and an upper riser portion (1b), which is above the lower riser portion (1a), and wherein the mutual distance between the first riser cable (17n) and the second riser cable (17a) is larger in the lower riser portion (1a) than in the upper riser portion (1b).

4. A riser heating system according to claim 3, wherein the riser (1) further comprises a dry riser portion (1c) that is above a sea surface (7) and above the upper riser portion (1b), wherein the mutual distance between the first riser cable (17n) and the second riser cable (17a) is larger in the upper riser portion (1b) than in the dry riser portion (1c).

5. A riser heating system according to one of the preceding claims, wherein the power supply (13) is configured to provide different frequencies of the electric power supplied to the first and second output lines (15a, 15b).

6. A riser heating system according to claim 5, wherein
the riser (1) further comprises a temperature sensor (31) configured to measure the temperature of the riser steel pipe (2) and/or the fluid inside the riser steel pipe (2),
the system further comprises a control unit (33), which is connected to the temperature sensor (31) and which is configured to control the output frequency of the power supply (13) based on input from the temperature sensor (31).

7. A riser heating system according to one of the preceding claims,
wherein the riser (1) comprises an outer sheath (21) and filler material (23) between the outer sheath and the riser steel pipe (2),
and wherein the first and second riser cables (17n, 17a) are embedded in the filler material (23).

8. A riser heating system according to one of the preceding claims, wherein the number of riser cables (17a, 17b, 17c, 17d) is larger than the number of output lines (15a, 15b) that power the riser cables, as each riser cable is connected to another riser cable by means of at least one upper or lower turn (37a, 37b, 39).

9. A riser heating system according to claim 8, wherein at least one upper turn (39) is arranged below the upper 2 % of the vertical extension of the riser (1).

10. A riser heating system according to claim 1, wherein the system comprises a first set (16) and a second set (18) of riser cables (17a, 17b, 17n),
wherein the first set (16) comprises a lower turn (37) that connects the riser cables (17a, 17b),
and wherein the first riser cable (17n) of the second set (18) is grounded at the position of the lower riser termination (11a), the second riser cable (17a) of the second set (18) connects to the pipeline cable (19),
wherein the system further comprises a switch (41) configured to switch between connection of the electric power supply (13) to the first set and connection of the electric power supply (13) to the second set, respectively.

11. A riser heating system according to one of the preceding claims, wherein the riser (1) comprises an upper riser termination (11b) at an upper end and a lower riser termination (11a) at a lower end, the riser heating system comprises four riser cables (17n, 17a, 17b, 17c),
wherein the first cable (17n) is connected to earth at the lower riser terminal (11a) and to a first node of a switching arrangement (41) at an upper portion,
wherein a second node of the switching arrangement (41) is connected to a third riser cable (17b),
wherein the switching arrangement (41) is configured for switching between a high-power riser heating mode and a low-power riser heating mode,
wherein when in the low-power riser heating mode, current is guided through the first node,
wherein when in the high-power riser heating mode, current is guided through the second node,
such that when in the high-power riser heating mode, current is guided through more riser cables (17n, 17a, 17b, 17c) than when in the low-power riser heating mode.

12. A riser heating system according to one of the preceding claims, wherein the power supply is a first power supply (13), further comprising
- a second power supply (113) which is a multiphase power supply;
- a topside transformer (49) to which the multiphase output lines of the second power supply (113) and one of the output lines (15a) of the first power supply (13) connect;
- a load-drive cable (117) having a plurality of cores, connected to the topside transformer (49) and extending down along the riser (1);
- a subsea load pipeline cable (119) having a plurality of cores and extending along a pipeline (9) extending between a near location (10) and a remote location (20), wherein the subsea load pipeline cable (119) connects to the load-drive cable (117) at the near location (10);
- a subsea transformer (53) at the remote location (20), connected to the subsea load pipeline cable (119) and having output lines (55a, 55b, 55c, 55n), wherein one output line (55n) connects to earth at the remote location (20) and the other output lines (55a, 55b, 55c) connect to a load (47) at the remote location (20), such that the second power supply (113) powers the load (47).

## Patentansprüche

1. Steigrohrheizsystem, das zum Beheizen eines Kohlenwasserstoff leitenden Steigrohrs (1) angeordnet ist, das ein Steigrohrstahlrohr (2) umfasst und das sich aus einer Oberflächenstruktur (5) in Richtung des Meeresbodens (3) erstreckt, das System umfassend
- eine Zufuhr (13) von elektrischer Leistung, umfassend eine erste Ausgangsleitung (15a) und eine zweite Ausgangsleitung (15b);
- ein erstes Steigrohrkabel (17n), das mit der ersten Ausgangsleitung (15a) verbunden ist, und ein zweites Steigrohrkabel (17a), das mit der zweiten Ausgangsleitung (15b) verbunden ist, wobei sich das erste und das zweite Steigrohrkabel (17n, 17a) entlang des Steigrohrstahlrohrs (2) erstrecken;
wobei die Leistungszufuhr (13) konfiguriert ist, um elektrische Wechselströme in das erste und das zweite Steigrohrkabel (17n, 17a) zuzuführen, wodurch Hitze in das Steigrohrstahlrohr (2) induziert wird,
wobei das Steigrohr (1) an einem oberen Ende einen oberen Steigrohrabschluss (11b) und an einem unteren Ende einen unteren Steigrohrabschluss (11a) umfasst,
wobei der untere Steigrohrabschluss (11a) mit einer Stahlrohrleitung (9) verbunden ist, die sich zwischen dem unteren Steigrohrabschluss und einer entfernten Stelle (20) erstreckt, wobei sich ein Rohrleitungskabel (19) entlang der Stahlrohrleitung (9) erstreckt,
wobei das erste Steigrohrkabel (17n) an der Position des unteren Steigrohrabschlusses (11a) geerdet ist, das Rohrleitungskabel (19) an der entfernten Stelle (20) geerdet ist, **dadurch gekennzeichnet, dass**
das zweite Steigrohrkabel (17a) mit dem Rohrleitungskabel (19) verbunden ist,
sodass der Strom, der von der Leistungszufuhr (13) zugeführt wird, durch den Stahl der Rohrleitung (9) fließt.

2. Steigrohrheizsystem nach Anspruch 1, wobei das Rohrleitungskabel (19) über ein Induktionsheizkabel (45) für Unterwasserkomponenten geerdet ist, das zwischen Erde und dem Rohrleitungskabel (19) verbunden ist, und wobei das Induktionsheizkabel (19) für Unterwasserkomponenten neben einer Unterwasserkomponente (43) angeordnet ist, umfassend Stahl oder ein anderes Eisenmaterial.

3. Steigrohrheizung nach einem der vorstehenden Ansprüche, wobei das Steigrohr (1) einen unteren Steigrohrabschnitt (1a) und einen oberen Steigrohrabschnitt (1b) aufweist, der oberhalb des unteren Steigrohrabschnitts (1a) liegt, und wobei der gegenseitige Abstand zwischen dem ersten Steigrohrkabel (17n) und dem zweiten Steigrohrkabel (17a) in dem unteren Steigrohrabschnitt (1a) größer als in dem oberen Steigrohrabschnitt (1b) ist.

4. Steigrohrheizsystem nach Anspruch 3, wobei das Steigrohr (1) ferner einen trockenen Steigrohrabschnitt (1c) umfasst, der sich oberhalb einer Meeresoberfläche (7) und oberhalb des oberen Steigrohrabschnitts (1b) befindet, wobei der gegenseitige Abstand zwischen dem ersten Steigrohrkabel (17n) und dem zweiten Steigrohrkabel (17a) in dem oberen Steigrohrabschnitt (1b) größer als in dem trockenen Steigrohrabschnitt (1c) ist.

5. Steigrohrheizsystem nach einem der vorstehenden Ansprüche, wobei die Leistungszufuhr (13) konfiguriert ist, um unterschiedliche Frequenzen der elektrischen Leistung bereitzustellen, die der ersten und der zweiten Ausgangsleitung (15a, 15b) zugeführt wird.

6. Steigrohrheizungssystem nach Anspruch 5, wobei
das Steigrohr (1) ferner einen Temperatursensor (31) umfasst, der konfiguriert ist, um die Temperatur des Steigrohrstahlrohrs (2) und/oder des Fluids im Inneren des Steigrohrstahlrohrs (2) zu messen; das System ferner eine Steuereinheit (33) umfasst, die mit dem Temperatursensor (31) verbunden ist und die konfiguriert ist, um die Ausgangsfrequenz der Leistungszufuhr (13) basierend auf einer Eingabe von dem Temperatursensor (31) zu steuern.

7. Steigrohrheizsystem nach einem der vorstehenden Ansprüche,
wobei das Steigrohr (1) eine Außenhülle (21) und Füllmaterial (23) zwischen der Außenhülle und dem Steigrohrstahlrohr (2) umfasst,
und wobei das erste und das zweite Steigrohrkabel (17n, 17a) in das Füllmaterial (23) eingebettet sind.

8. Steigrohrheizung nach einem der vorstehenden Ansprüche, wobei die Anzahl von Steigrohrkabeln (17a, 17b, 17c, 17d) größer als die Anzahl von Ausgangsleitungen (15a, 15b) ist, die die Steigrohrkabel mit Leistung versorgen, da jedes Steigrohrkabel mittels mindestens einer oberen oder unteren Windung (37a, 37b, 39) mit einem anderen Steigrohrkabel verbunden ist.

9. Steigrohrheizung nach Anspruch 8, wobei mindestens eine obere Windung (39) unterhalb der oberen 2 % der vertikalen Erstreckung des Steigrohrs (1) angeordnet ist.

10. Steigrohrheizsystem nach Anspruch 1, wobei das System einen ersten Satz (16) und einen zweiten Satz (18) von Steigrohrkabeln (17a, 17b, 17n) umfasst,
wobei der erste Satz (16) eine untere Windung (37) umfasst, die die Steigrohrkabel (17a, 17b) verbindet,
und wobei das erste Steigrohrkabel (17n) des zweiten Satzes (18) an der Position des unteren Steigrohrabschlusses (11a) geerdet ist, das zweite Steigrohrkabel (17a) des zweiten Satzes (18) mit dem Rohrleitungskabel (19) verbunden ist,
wobei das System ferner einen Schalter (41) umfasst, der konfiguriert ist, um zwischen einer Verbindung der Zufuhr (13) von elektrischer Leistung mit dem ersten Satz beziehungsweise der Verbindung der Zufuhr (13) von elektrischer Leistung mit dem zweiten Satz umzuschalten.

11. Steigrohrheizungssystem nach einem der vorstehenden Ansprüche, wobei das Steigrohr (1) an einem oberen Ende einen oberen Steigrohrabschluss (11b) und an einem unteren Ende einen unteren Steigrohrabschluss (11a) aufweist, das Steigrohrheizungssystem vier Steigrohrkabel (17n, 17a, 17b, 17c) umfasst,
wobei das erste Kabel (17n) an dem unteren Steigrohranschluss (11a) mit Erde und an einem oberen Abschnitt mit einem ersten Knoten einer Schaltanordnung (41) verbunden ist,
wobei ein zweiter Knoten der Schaltanordnung (41) mit einem dritten Steigrohrkabel (17b) verbunden ist,
wobei die Schaltanordnung (41) zum Umschalten zwischen einem Steigrohrheizmodus mit hoher Leistung und einem Steigrohrheizmodus mit niedriger Leistung konfiguriert ist,
wobei, wenn in dem Steigrohrheizmodus mit niedriger Leistung, Strom durch den ersten Knoten geführt wird,
wobei, wenn in dem Steigrohrheizmodus mit hoher Leistung, Strom durch den zweiten Knoten geführt wird,
sodass, wenn in dem Steigrohrheizmodus mit hoher Leistung, Strom durch mehr Steigrohrkabel (17n, 17a, 17b, 17c) als wenn in dem Steigrohrheizmodus mit niedriger Leistung geführt wird.

12. Steigrohrheizungssystem nach einem der vorstehenden Ansprüche, wobei die Leistungszufuhr eine erste Leistungszufuhr (13) ist, ferner umfassend
- eine zweite Leistungszufuhr (113), die eine mehrphasige Leistungszufuhr ist;
- einen oberirdischen Transformator (49), mit dem die mehrphasigen Ausgangsleitungen der zweiten Leistungszufuhr (113) und eine der Ausgangsleitungen (15a) der ersten Leistungszufuhr (13) verbunden sind;
- ein Lastantriebskabel (117), das eine Vielzahl von Seelen aufweist, das mit dem oberirdischen Transformator (49) verbunden ist und sich entlang des Steigrohrs (1) nach unten erstreckt;
- ein Unterwasserlastrohrleitungskabel (119), das eine Vielzahl von Seelen aufweist und sich entlang einer Rohrleitung (9) zwischen einer nahegelegenen Stelle (10) und einer entfernten Stelle (20) erstreckt, wobei das Unterwasserlastrohrleitungskabel (119) an der nahegelegenen Stelle (10) mit dem Lastantriebskabel (117) verbunden ist,
- einen Unterwassertransformator (53) an der entfernten Stelle (20), der mit dem Unterwasserlastrohrleitungskabel (119) verbunden ist und Ausgangsleitungen (55a, 55b, 55c, 55n) aufweist, wobei eine Ausgangsleitung (55n) mit Erde an der entfernten Stelle (20) verbunden ist und die anderen Ausgangsleitungen (55a, 55b, 55c) mit einer Last (47) an der entfernten Stelle (20) verbunden sind, sodass die zweite Leistungszufuhr (113) die Last (47) mit Leistung versorgt.

## Revendications

1. Système de chauffage à colonne montante agencé de façon à chauffer une colonne montante conductrice d'hydrocarbures (1) qui comprend un tube d'acier de colonne montante (2) et qui s'étend depuis une structure de surface (5) vers le fond marin (3), le système comprenant
- une alimentation en énergie électrique (13) comprenant une première ligne de sortie (15a) et une seconde ligne de sortie (15b) ;
- un premier câble de colonne montante (17n) raccordé à la première ligne de sortie (15a) et un deuxième câble de colonne montante (17a)
raccordé à la seconde ligne de sortie (15b), dans lequel les premier et deuxième câbles de colonne montante (17n, 17a) s'étendent le long du tube d'acier de colonne montante (2) ;
dans lequel l'alimentation en énergie (13) est configurée pour acheminer des courants électriques alternatifs dans les premier et deuxième câbles de colonne montante (17n, 17a), induisant de ce fait de la chaleur dans le tube d'acier de colonne montante (2),
dans lequel la colonne montante (1) comprend une terminaison supérieure de colonne montante (11b) au niveau d'une extrémité supérieure et une terminaison inférieure de colonne montante (11a) au niveau d'une extrémité inférieure,
dans lequel la terminaison inférieure de colonne montante (11a) se raccorde à un pipeline en acier (9) s'étendant entre la terminaison inférieure de colonne montante et un emplacement distant (20), dans lequel un câble de pipeline (19) s'étend le long du pipeline en acier (9),
dans lequel le premier câble de colonne montante (17n) est mis à la terre au niveau de la position de la terminaison inférieure de colonne montante (11a), le câble de pipeline (19) est mis à la terre au niveau de l'emplacement distant (20), **caractérisé en ce que**
le deuxième câble de colonne montante (17a) se raccorde au câble de pipeline (19),
de telle sorte que le courant acheminé par l'alimentation électrique (13) circule à travers l'acier du pipeline (9).

2. Système de chauffage à colonne montante selon la revendication 1, dans lequel le câble de pipeline (19) est mis à la terre à travers un câble de chauffage par induction de composant sous-marin (45), qui est raccordé entre la terre et le câble de pipeline (19), et dans lequel le câble de chauffage par induction de composant sous-marin (19) est agencé à côté d'un composant sous-marin (43) comprenant de l'acier ou un autre matériau ferreux.

3. Système de chauffage à colonne montante selon l'une des revendications précédentes, dans lequel la colonne montante (1) comprend une partie inférieure de colonne montante (1a) et une partie supérieure de colonne montante (1b), qui est au-dessus de la partie inférieure de colonne montante (1a), et dans lequel la distance mutuelle entre le premier câble de colonne montante (17n) et le deuxième câble de colonne montante (17a) est plus grande dans la partie inférieure de colonne montante (1a) que dans la partie supérieure de colonne montante (1b).

4. Système de chauffage à colonne montante selon la revendication 3, dans lequel la colonne montante (1) comprend en outre une partie sèche de colonne montante (1c) qui est au-dessus d'une surface de la mer (7) et au-dessus de la partie supérieure de colonne montante (1b), dans lequel la distance mutuelle entre le premier câble de colonne montante (17n) et le deuxième câble de colonne montante (17a) est plus grande dans la partie supérieure de colonne montante (1b) que dans la partie sèche de colonne montante (1c).

5. Système de chauffage à colonne montante selon l'une des revendications précédentes, dans lequel l'alimentation électrique (13) est configurée pour fournir différentes fréquences de l'énergie électrique acheminée aux première et seconde lignes de sortie (15a, 15b).

6. Système de chauffage à colonne montante selon la revendication 5, dans lequel
la colonne montante (1) comprend en outre un capteur de température (31) configuré pour mesurer la température du tube d'acier de colonne montante (2) et/ou du fluide à l'intérieur du tube d'acier de colonne montante (2), le système comprend en outre une unité de contrôle (33), qui est connectée au capteur de température (31) et qui est configurée pour contrôler la fréquence de sortie de l'alimentation en énergie (13) en fonction des données fournies par le capteur de température (31).

7. Système de chauffage à colonne montante selon l'une des revendications précédentes,
dans lequel la colonne montante (1) comprend une gaine externe (21) et un matériau de remplissage (23) entre la gaine externe et le tube d'acier de colonne montante (2),
et dans lequel les premier et deuxième câbles de colonne montante (17n, 17a) sont intégrés dans le matériau de remplissage (23).

8. Système de chauffage à colonne montante selon l'une des revendications précédentes, dans lequel le nombre de câbles de colonne
montante (17a, 17b, 17c, 17d) est plus grand que le nombre de lignes de sortie (15a, 15b) qui mettent sous tension les câbles de colonne montante, du fait que chaque câble de colonne montante est raccordé à un autre câble de colonne montante au moyen d'au moins une spire supérieure ou inférieure (37a, 37b, 39).

9. Système de chauffage à colonne montante selon la revendication 8, dans lequel au moins une spire supérieure (39) est agencée en dessous des 2 % supérieurs de l'extension verticale de la colonne montante (1).

10. Système de chauffage à colonne montante selon la revendication 1, dans lequel le système comprend un premier ensemble (16) et un second ensemble (18) de câbles de colonne montante (17a, 17b, 17n),
dans lequel le premier ensemble (16) comprend une spire inférieure (37) qui raccorde les câbles de colonne montante (17a, 17b),
et dans lequel le premier câble de colonne montante (17n) du second ensemble (18) est mis à la terre au niveau de la position de la terminaison inférieure de colonne montante (11a), le second câble de colonne montante (17a) du second ensemble (18) se raccorde au câble de pipeline (19),
dans lequel le système comprend en outre un commutateur (41) configuré pour commuter entre une connexion de l'alimentation en énergie électrique (13) au premier ensemble et une connexion de l'alimentation en énergie électrique (13) au second ensemble, respectivement.

11. Système de chauffage à colonne montante selon l'une des revendications précédentes, dans lequel la colonne montante (1) comprend une terminaison supérieure de colonne montante (11b) au niveau d'une extrémité supérieure et une terminaison inférieure de colonne montante (11a) au niveau d'une extrémité inférieure, le système de chauffage à colonne montante comprend quatre câbles de colonne montante (17n, 17a, 17b, 17c),
dans lequel le premier câble (17n) est raccordé à la terre au niveau de la borne inférieure de colonne montante (11a) et à un premier nœud d'un agencement de commutation (41) au niveau d'une partie supérieure,
dans lequel un second nœud de l'agencement de commutation (41) est raccordé à un troisième câble de colonne montante (17b),
dans lequel l'agencement de commutation (41) est configuré pour commuter entre un mode de chauffage de colonne montante à haute puissance et un mode de chauffage de colonne montante à faible puissance,
dans lequel lorsqu'il est en mode de chauffage de colonne montante à faible puissance, le courant est guidé à travers le premier nœud,
dans lequel lorsqu'il est en mode de chauffage de colonne montante à haute puissance, le courant est guidé à travers le second nœud,
de telle sorte lorsqu'il est en mode de chauffage de colonne montante à haute puissance, le courant est guidé à travers plus de câbles de colonne montante (17n, 17a, 17b, 17c) que lorsqu'il est en mode de chauffage de colonne montante à faible puissance.

12. Système de chauffage à colonne montante selon l'une des revendications précédentes, dans lequel l'alimentation en énergie est une première alimentation en énergie (13), comprenant en outre
- une seconde alimentation en énergie (113) qui est une alimentation en énergie multiphasée ;
- un transformateur côté dessus (49) auquel les lignes de sortie multiphasées de la seconde alimentation en énergie (113) et l'une des lignes de sortie (15a) de la première alimentation en énergie (13) se raccordent ;
- un câble d'entraînement de charge (117) ayant une pluralité d'âmes, raccordées au transformateur côté dessus (49) et s'étendant vers le bas le long de la colonne montante (1) ;
- un câble sous-marin de pipeline de charge (119) ayant une pluralité d'âmes et s'étendant le long d'un pipeline (9) entre un emplacement proche (10) et un emplacement distant (20), dans lequel le câble sous-marin de pipeline de charge (119) se raccorde au câble d'entraînement de charge (117) au niveau de l'emplacement proche (10) ;
- un transformateur sous-marin (53) au niveau de l'emplacement distant (20), raccordé au câble de pipeline de charge sous-marin (119) et ayant des lignes de sortie (55a, 55b, 55c, 55n), dans lequel une ligne de sortie (55n) se raccorde à la terre au niveau de l'emplacement distant (20) et les autres lignes de sortie (55a, 55b, 55c) se raccordent à une charge (47) au niveau de l'emplacement distant (20), de telle sorte que la seconde alimentation en énergie (113) met sous tension la charge (47).
